Europäisches Patentamt

European Patent Office

Office européen des brevets

(11) Veröffentlichungsnummer: **0 196 136 B1**

(12) **EUROPÄISCHE PATENTSCHRIFT**

(45) Veröffentlichungstag der Patentschrift: **14.10.92**

(51) Int. Cl.⁵: **G02B 6/38**

(21) Anmeldenummer: **86200462.9**

(22) Anmeldetag: **20.03.86**

(54) **Steckverbindung für Lichtleitfasern.**

(30) Priorität: **22.03.85 DE 3510423**

(43) Veröffentlichungstag der Anmeldung:
**01.10.86 Patentblatt 86/40**

(45) Bekanntmachung des Hinweises auf die
Patenterteilung:
**14.10.92 Patentblatt 92/42**

(84) Benannte Vertragsstaaten:
**DE FR GB**

(56) Entgegenhaltungen:
**US-A- 4 361 380**
**US-A- 4 487 474**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Schmidt, Bernhard**
**Rehfeld 8**
**W-5206 Neunkirchen(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

**Beschreibung**

Die Erfindung bezieht sich auf eine Steckverbindung für Lichtwellenleiter, insbesondere Monomodefasern, mit einer koaxial in einer Gehäusebuchse gelagerten Aufnahmehülse, mit mindestens einem in die Aufnahmehülse einsteckbaren einen Kragenansatz aufweisenden Steckerstift, und mit mindestens einer zugehörigen Schraubkappe für jenes Ende der Gehäusebuchse, in das der Steckerstift einführbar ist, wobei im aufgeschraubten Zustand der Schraubkappe der Kragenansatz des Steckerstiftes axial gegen die Stirnfläche der Aufnahmehülse gepreßt wird, mit einem sich über die gesamte Länge der Aufnahmehülse erstreckenden Entlüftungskanal, aus welchem Luft nach außen entweichen kann.

Eine derartige Steckverbindung ist durch JP-A-56 83 709 bekannt. Durch JP-A-58 130 311 ist es bekannt, in einem optischen Stecker eine radiale Entlüftungsbohrung vorzusehen.

Insbesondere bei monomodetauglichen Steckverbindungen sind zwischen dem Steckerstift und der Aufnahmehülse sehr genaue und enge Passungen erforderlich. Damit die Luft beim Einführen des Steckerstiftes aus dem Innenraum der Aufnahmehülse entweichen kann, müssen Entlüftungswege vorgesehen werden. Diese sind bei der eingangs beschriebenen Anordnung jedoch im Bereich der Paßfläche zwischen Steckerstift und Aufnahmehülse angeordnet, sodaß dort befindliche Kanäle die Tragfähigkeit des Steckerstiftes beeinträchtigen, das Eindringen von Schmutz ermöglichen und einen hohen Fertigungsaufwand erfordern würden.

Die in JP-A-58 130 311 vorgestellte Entlüftung hat den Nachteil, daß durch die radiale Entlüftungsbohrung insbesondere beim Herauszichen des Steckers Schmutz in den Innenraum der Buchse gelangen bzw. eingesaugt werden kann.

Der Erfindung liegt deshalb die Aufgabe zugrunde, eine Steckerverbindung der eingangs genannten Art derart zu gestalten, daß bei geringem Herstellungsaufwand eine zuverlässige Entlüftung möglich ist, ohne daß Schmutz in den Innenraum der Aufnahmehülse eindringen kann.

Die Lösung gelingt dadurch, daß der Entlüftungskanal in der Außenfläche der Aufnahmehülse ausgebildet ist, und daß die Aufnahmehülse im Bereich des vorderen Endes des eingeführten Steckerstiftes eine radiale Bohrung aufweist.

Der Entlüftungskanal kann vorteilhaft als Nut ausgebildet sein oder als Abflachung der zylindrischen Außenkontur der Aufnahmebuchse.

Ein vorteilhaftes Ausführungsbeispiel der Erfindung ist in der Zeichnung dargestellt.

Fig. 1    zeigt einen Längsschnitt durch eine erfindungsgemäße Steckverbindung,

Fig. 2    zeigt in perspektivischer Ansicht eine Aufnahmehülse mit einem als Nut ausgebildeten Kanal,

Fig. 3    zeigt eine abgewandelte Ausführung der Aufnahmehülse mit einem als Abflachung ausgebildeten Kanal.

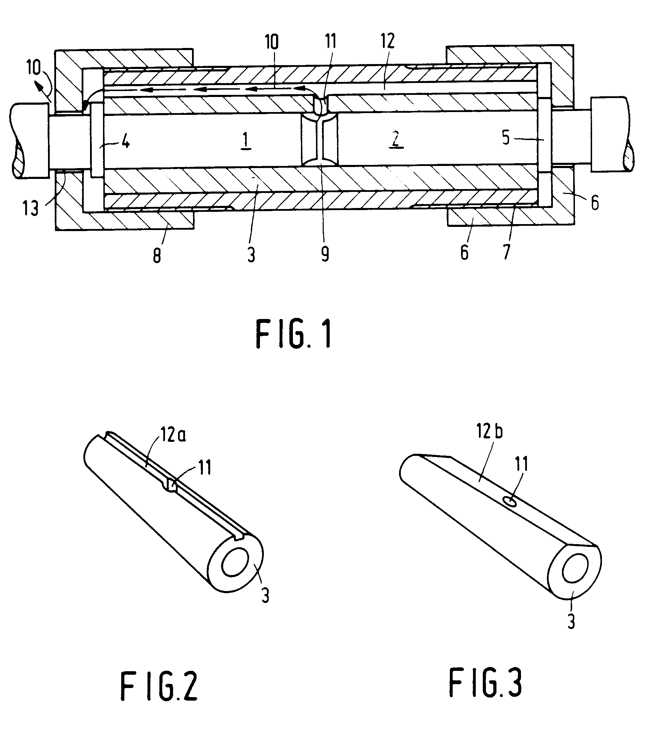

Beim Ausführungsbeispiel nach Fig. 1 sind Steckerstifte 1 und 2, in welchen nicht dargestellte Enden von zu koppelnden Monomodefasern zentral durchgehend geführt sind, beidseitig in die Aufnahmehülse 3 eingeführt, wobei die Kragenansätze 4 bzw. 5 der Steckerstifte 1 bzw. 2 gegen Stirnflächen der Aufnahmehülse 3 anliegen.

Wie im rechten Teil der Fig. 1 erkennbar ist, wird der Steckerstift 2 durch die Schraubkappe 6, welche auf die die Aufnahmehülse 3 umgebende Gehäusebuchse aufgeschraubt (Gewinde 7) ist, axial fixiert. Auf der linken Seite ist die Schraubkappe 8 in noch nicht vollständig aufgeschraubter Lage dargestellt. Die Paßfläche zwischen den Steckerstiften 1 und 2 einerseits und der Aufnahmehülse 3 andererseits sind sehr genau und eng, damit eine insbesondere bei der Kopplung von Monomodefasern erforderliche präzise Koaxialität der beiden Steckerstifte gewährleistet ist.

Die Luft aus dem Innenraum 9 der Aufnahmehülse 3 entweicht beim Einführen des Steckerstiftes 1, nachdem der Steckerstift 2 bereits in endgültiger Lage fixiert wurde, über den durch Pfeile 10 angedeuteten Weg, zunächst durch die radiale Entlüftungsbohrung 11 und den Kanal 12 in den stirnseitigen Raum 13 zwischen der Schraubkappe 8 und der Aufnahmehülse 3 und von dort durch den Ringspalt 13 zwischen Schraubkappe 8 und Steckerstift 1 nach außen.

Wenn danach auch die Schraubkappe 8 fest gegen den Kragenansatz 4 angezogen wird, ist der Entlüftungsweg über die Pfeile 10 nach außen hin geschlossen, so daß kein Schmutz eindringen kann.

Der Kanal 12 verläuft durchgehend über die Länge der Aufnahmebuchse 3 und braucht sich nur über einen engen Umfangsbereich erstrecken. Er kann gemäß Fig. 2 als z.B. eingefräste Nut 12a oder gemäß Fig. 3 als Abflachung 12b der Außenkontur der Aufnahmebuchse 3 ausgebildet sein, wobei nur ein geringer Herstellungsaufwand erforderlich ist.

In Abwandlung der Ausführungsart nach Fig. 1 wäre es gemäß der Erfindung auch möglich, nur das Ende einer Lichtleitfaser durch einen Steckerstift zu führen, während das Ende der zweiten Lichtleitfaser direkt zentral in der Aufnahmehülse fixiert ist.

**Patentansprüche**

1.   Steckverbindung für Lichtwellenleiter, insbesondere Monomodefasern, mit einer koaxial in einer Gehäusebuchse gelagerten Aufnahmehülse (3), mit mindestens einem in die Aufnahmehülse (3) einsteckbaren einen Kragenansatz (4,5) aufweisenden Steckerstift (1,2), und mit mindestens einer zugehörigen Schraubkappe (6,8) für jenes Ende der Gehäusebuchse, in das der Steckerstift ein führbar ist, wobei im aufgeschraubten Zustand der Schraubkappe der Kragenansatz (4,5) des Steckerstiftes (1,2) axial gegen die Stirnfläche der Aufnahmehülse (3) gepreßt wird, mit einem sich über die gesamte Länge der Aufnahmehülse (3) erstreckenden Entlüftungskanal (12,12a, 12b), aus welchem Luft nach außen entweichen kann, dadurch gekennzeichnet, daß der Entlüftungskanal (12,12a,12b) in der Außenfläche der Aufnahmehülse (3) ausgebildet ist, und daß die Aufnahmehülse (3) im Bereich des vorderen Endes des eingeführten Steckerstiftes (1,2) eine radiale Bohrung (11) aufweist.

2. Steckverbindung nach Anspruch 1,
dadurch gekennzeichnet, daß die Aufnahmehülse (3) beidseitig Einführungsöffnungen zur Aufnahme zweier Steckerstifte (1, 2) aufweist.

3. Steckverbindung nach Anspruch 1 oder 2,
dadurch gekennzeichnet, daß der Kanal (12) als Nut (12a) ausgebildet ist.

4. Steckverbindung nach Anspruch 1 oder 2,
dadurch gekennzeichnet, daß der Kanal (12) als Abflachung (12b) der zylindrischen Außenkontur der Aufnahmebuchse (3) ausgebildet ist.

## Claims

1. A connector for optical fibres, notably monomode fibres, which includes a receptacle (3) which is coaxially accommodated in a housing sleeve and in which there can be inserted at least one connector pin (1,2) which is provided with a collar (4,5) and at least one associated screw cap (6,8) for each end of the housing sleeve into which the connector pin can be introduced, while in the screwed-on state of the screw cap the collar (4,5) of the connector pin (1,2) is axially pressed against the end face of the receptacle (3), which receptacle (3) is provided with a vent duct (12a, 12b, 12c) extending throughout its length, wherefrom air can escape to the environment, characterized in that the vent duct (12a, 12b, 12c) is formed in the outer face of the receptacle (3) and in that the receptacle (3) has a radial hole (11) at the area of the front end of the inserted connector pin (1,2).

2. A connector as claimed in Claim 1, characterized in that the receptacle (3) is provided on both sides with openings for the insertion of two connector pins (1,2).

3. A connector as claimed in Claim 1 or 2, characterized in that the duct (12) is constructed as a groove (12a).

4. A connector as claimed in Claim 1 or 2, characterized in that the duct (12) is constructed as a flattened portion (12b) of the cylindrical outer contour of the receptacle (3).

## Revendications

1. Connexion à fiches pour des guides d'ondes optiques, en particulier des fibres monomode, comportant une douille de réception (3) montée coaxialement dans un fût d'étui, au moins une fiche (1, 2) pouvant être enfoncée dans la douille de réception (3) et présentant un collet (4,5), et au moins une coiffe à visser (6, 8) associée à chaque extrémité du fût d'étui, dans laquelle la fiche peut être engagée et où, dans l'état vissé de la coiffe, le collet (4, 5) de la fiche (1,2) est pressé axialement contre la face d'about de la douille de réception (3), un canal d'évacuation de l'air (12, 12a, 12b) qui s'étend sur toute la longueur de la douille de réception (3) étant prévu pour permettre à l'air de s'échapper vers l'extérieur, caractérisée en ce que le canal d'évacuation de l'air (12, 12a, 12b) est ménagé dans la surface extérieure de la douille de réception (3), et que la douille de réception (3) présente une lumière radiale (11) dans la zone de l'extrémité antérieure de la fiche (1,2) enfoncée.

2. Connexion à fiches suivant la revendication 1, caractérisée en ce que la douille de réception (3) présente, des deux côtés, des orifices d'introduction destinés à recevoir deux fiches (1, 2).

3. Connexion à fiches suivant la revendication 1 ou 2, caractérisée en ce que le canal (12) a la forme d'une rainure (12a).

4. Connexion à fiches suivant la revendication 1 ou 2, caractérisée en ce que le canal (12) a la forme d'un méplat (12b) interrompant le contour extérieur cylindrique de la douille de réception (3).

FIG. 1

FIG.2

FIG.3